Europäisches Patentamt

European Patent Office (11) Veröffentlichungsnummer: **0 023 585 B1**

Office européen des brevets

(12) EUROPÄISCHE PATENTSCHRIFT

(45) Veröffentlichungstag der Patentschrift: 22.02.84

(51) Int. Cl.³: **C 25 B 1/00**, C 01 G 56/00, C 01 G 43/00

(21) Anmeldenummer: 80103866.2

(22) Anmeldetag: 07.07.80

(54) Verfahren zur elektrochemischen Einstellung der Pu(VI)-oxidationsstufe.

(30) Priorität: 18.07.79 DE 2929122

(43) Veröffentlichungstag der Anmeldung: 11.02.81 Patentblatt 81/6

(45) Bekanntmachung des Hinweises auf die Patenterteilung: 22.02.84 Patentblatt 84/8

(84) Benannte Vertragsstaaten: AT BE CH DE FR GB IT LI SE

(56) Entgegenhaltungen:
DE - A - 2 016 506
GB - A - 1 301 375
GB - A - 1 333 978

(73) Patentinhaber: ALKEM GMBH, Postfach 110069, D-6450 Hanau 11 (DE)

(72) Erfinder: Herrmann, Fritz, Dr., Bruchwiesenweg 15, D-6450 Hanau 9 (DE)
Erfinder: Ost, Christian, Taunusstrasse 5, D-8752 Mainaschaff (DE)

(74) Vertreter: Mehl, Ernst, Dipl.-Ing., Postfach 22 01 76, D-8000 München 22 (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Verfahren zur elektrochemischen Einstellung der Pu (VI)-Oxidationsstufe

Die vorliegende Erfindung betrifft ein Verfahren zur elektrochemischen Einstellung der Plutonium (VI)-Oxidationsstufe in salpetersauren Lösungen. Die Notwendigkeit einer derartigen Wertigkeitseinstellung ergibt sich z. B. für die gemeinsame Ausfällung von Plutonium mit Uran als isotype Mischkristalle, die dann durch thermische Zersetzung in Uran/Plutonium-Mischoxide übergeführt werden. Solche Mischoxide besitzen eine hervorragende Salpetersäurelöslichkeit. In der BE-A-874 887, auf die hier ausdrücklich verwiesen wird, sind diese Verhältnisse ausführlich dargestellt worden. Das dort beschriebene Verfahren zur Einstellung der Wertigkeit erfordert eine größere Anzahl von Apparaturen, so daß sich die Aufgabe stellte, diese Wertigkeitseinstellung mit einfacheren Mitteln zu erreichen. Ausgangspunkt war dabei das bereits in der genannten BE-A-874 887 erwähnte Prinzip der Oxidation auf elektrolytischem Weg.

Dieser Prinziphinweis führt zur Lösung dieser Aufgabe erfindungsgemäß zu einem Verfahren, das darin besteht, daß eine Ausgangslösung von $U^{6+}/Pu^{4+}$-Nitrat/$HNO_3$ in ständigem Kreislauf durch eine Elektrolysezelle bei einer Elektrodenspannung von etwa 3 Volt geführt wird.

Bei diesem Verfahren kann das Potential im Bereich oberhalb der Pu (VI)-Bildung weitgehend variabel, je nach den Stromdichtebedingungen eingestellt werden. Durch die Möglichkeit, dieses Verfahren auch oberhalb der Sauerstoffabscheidung zu betreiben, soll erreicht werden, daß der geschwindigkeitsbestimmende Schritt der Plutonium-Sauerstoff-Bindungsbildung durch ein erhöhtes Angebot an atomarem Sauerstoff beschleunigt wird. Die Sauerstoffanlagerung bei der Plutonyl-Bildung wird durch elektrokatalytische Effekte gesteuert. Aus diesem Grund sind neben dem Potential zur Optimierung des Verfahrensablaufs die Stromdichte, das Anodenmaterial und die hydrodynamischen Verhältnisse in der Zelle von Bedeutung. Ferner kann durch geeignete Wahl der Elektrolysenzellenform mit und ohne Diaphragma dafür Sorge getragen werden, daß Kathodenprozesse in den Hintergrund gedrängt werden und die Redox-Gleichgewichte auf der Seite der sechswertigen Uranyl- und Plutonylionen liegen. Dies bedeutet und stellt sicher, daß an der Kathode keine nennenswerten Anteile von vierwertigem Uran gebildet werden, die in der Lösung vorhandenes Pu(VI) und Pu (IV) bis zum dreiwertigen Zustand reduzieren könnten.

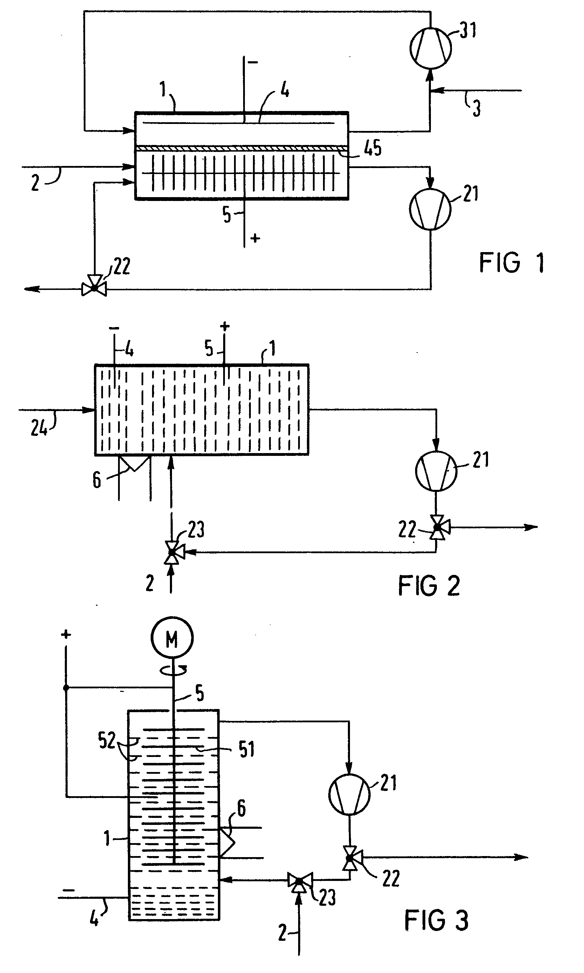

Zur weiteren Erläuterung dieser Erfindung seien nun beispielsweise drei Verfahrensvarianten anhand der Fig. 1, 2 und 3 beschrieben.

Die Fig. 1 zeigt schematisch die Durchführung des Elektrolyseverfahrens mit einer ein Diaphragma 45 aus Keramik oder einem Ionenaustauscher enthaltenden Elektrolysezelle 1. Letztere ist hier sozusagen in der Draufsicht dargestellt. Die Kathode 4 hat Scheibenform, die Anode 5 dagegen ist rechenartig aus einer Vielzahl von stirnseitig zum Diaphragma 45 hinweisenden Einzelscheiben aufgebaut und besteht beispielsweise aus Platinschwamm oder dimensionsstabilem Material, wie z. B. Ti/PtO als elektrolytischem Katalysator. Die Kathode 4 besteht günstigerweise aus Platin oder Grafit bzw. Glas-Kohlenstoff. Durch die unterschiedliche Form von Kathode und Anode wird sichergestellt, daß die Anodenfläche wesentlich größer ist und somit eine geringere Stromdichte aufzunehmen hat. Auf der einen Seite dieser Elektrolysezelle 1 wird nun in den Anodenraum die Ausgangslösung aus $U^{6+}/Pu^{4+}$-Nitrat/$HNO_3$ über die Leitung 2 eingeführt und mit Hilfe der Pumpe 21 und dem Dreiwegeventil 22 während des Elektrolysevorganges ständig im Kreislauf umgepumpt. Im Kathodenraum befindet sich $HNO_3$ 2—3 molar und wird über die Pumpe 31 ebenfalls stetig im Kreislauf umgepumpt. Typische Verfahrenswerte sind eine Klemmenspannung von 3 Volt, eine Stromdichte von 20—100 mA/cm² an der Anode und von 100—500 mA/cm² an der Kathode. Bei einer Arbeitstemperatur von etwa 70°C beträgt die Stromausbeute für die Plutonium (VI)-Bildung bis zu 70%. Es sei außerdem noch erwähnt, daß der kontinuierliche Zusatz von $HNO_3$ über die Leitung 3 dem Umsatz der Protonen an der Elektrode entspricht. Der Kreislauf des Elektrolyten über die Pumpe 21 wird so lange geführt, bis der gewünschte Oxidationsgrad erreicht ist, alsdann wird über das umgestellte Dreiwegeventil 22 die Lösung, die nunmehr aus $U^{6+}/Pu^{6+}$-Nitrat und $HNO_3$ besteht, abgeführt zur weiteren Verarbeitung.

In Fig. 2 ist ein Verfahren dargestellt, wobei eine Elektrolysezelle ohne Diaphragma Verwendung findet. Über die Leitung 2 wird die Ausgangslösung $U^{6+}/Pu^{4+}$-Nitrat/$HNO_3$ über das Dreiwegeventil 23 der Elektrolysezelle 1 zugeführt, desgleichen über die Leitung 24 $HNO_3$ auf der Kathodenseite. Auch hier findet wiederum ein Kreislauf mit Hilfe der Pumpe 21 statt, während die Redox-Gleichgewichte wegen der $HNO_3$ auf der Kathodenseite der Elektrolysezelle deutlich auf der Seite der sechswertigen Uranyl- und Plutonylionen liegen. Über das Dreiwegeventil 22 wird wieder die aufoxidierte Lösung entnommen. Die Elektroden 4 und 5 können wie in Fig. 1 aufgebaut sein, sie könnten aber ebenfalls als Schüttbettelektrode eingesetzt werden, da diese wesentlich größere spezifische Oberflächen aufweisen. Die Trennung der Elektroden 4 und 5 kann dabei durch eine Schüttung aus Isoliermaterial erfolgen. Die Betriebstemperatur in der Elektrolysezelle 1 beträgt dabei etwa 85°C. Zur Abführung der größeren Stromwärme im Kathodenraum dient die Kühlung 6. Die Stromdichte beträgt im Kathodenbereich 100 mA/cm² und im Anodenbereich 50 mA/cm².

Die Stromausbeute für die Plutonium (VI)-Bildung beträgt etwa 80%.

Die Fig. 3 zeigt eine Verfahrensausführung, bei der eine rotierende Anode 5 innerhalb der Elektrolysezelle 1 Verwendung findet. Die rotierende Anode, die eine Umdrehungszahl von 10 – 100/min hat, besteht aus einer vertikalen Welle, auf die in Abständen Elektrodenscheiben 51 angebracht sind. Zwischen diesen sind Strömungsleitbleche bzw. Verwirbelungseinrichtungen 52 angeordnet, die mit der Zellenwandung in leitender Verbindung stehen und ebenfalls mit dem positiven Pol der Stromquelle verbunden sind. Auch hier ist wiederum eine Kühleinrichtung 6 zur Temperaturregulierung vorgesehen. Die anodische Stromdichte erreicht bei dieser Verfahrensführung 200 mA/cm², ebenfalls bei 3 Volt Elektrolysespannung, bei der 70° C Betriebstemperatur und Stromausbeuten für die Pu (VI)-Bildung von ca. 85% erreicht werden.

Diese drei Beispiele zeigen, daß das erfindungsgemäße Verfahren Variationen erlaubt, sie erheben daher auch keinen Anspruch auf Vollständigkeit. Wesentlich ist jedoch allen diesen Verfahren, daß die Elektrolyten ständig im Kreislauf durch die Elektrolysezelle bei einer Elektrodenspannung bei 3 Volt geführt werden und dabei für eine gute Durchmischung Sorge getragen wird. Das dabei erreichte Endprodukt einer Uran-Plutonium-Lösung mit gleicher Wertigkeit der Schwermetalle ermöglicht eine einwandfreie Weiterverarbeitung zu Mischoxiden nach an sich bekannten Verfahren. Diese Mischoxide zeigen eine ausgezeichnete Salpetersäurelöslichkeit, was eine Voraussetzung für eine spätere gute Wiederaufarbeitung und Wiederverwendung der extrahierten Schwermetalle erlaubt.

## Patentansprüche

1. Verfahren zur elektrochemischen Einstellung der Pu (VI)-Oxidationsstufe in salpetersauren Lösungen, dadurch gekennzeichnet, daß eine Ausgangslösung von U⁶⁺/Pu⁴⁺-Nitrat/HNO₃ im ständigen Kreislauf durch eine Elektrolysezellel bei einer Elektrodenspannung bei 3 Volt geführt wird.

2. Verfahren nach Anspruch 1, dadurch gekennzeichnet, daß die Uran/Plutonium-Nitratlösung durch den Anodenraum geführt wird und der von diesem durch ein Diaphragma getrennte Kathodenraum von 2 – 3molarer HNO₃ im Kreislauf durchströmt wird, wobei bei einer Temperatur von etwa 70° C die Stromdichten an der Anode 20 – 100 mA/cm² und an der Kathode 100 – 500 mA/cm² eingestellt werden.

3. Verfahren nach Anspruch 2, dadurch gekennzeichnet, daß ein Diaphragma aus Keramik oder einem Ionenaustauscher, eine Anode aus Platin-Schwamm oder einem anderen dimensionsstabilen Material, wie PtO, und eine Kathode aus Platin, Grafit oder Glaskohlenstoff

verwendet werden.

4. Verfahren nach Anspruch 1, dadurch gekennzeichnet, daß eine Elektrolysezelle ohne Diaphragma Verwendung findet, der kathodenseitig HNO₃ zugeführt und die kathodenseitig gekühlt wird, mit einer Betriebstemperatur von 85° C und Stromdichten im Kathodenbereich von 100 mA/cm² sowie im Anodenbereich von 50 mA/cm².

5. Verfahren nach Anspruch 1, dadurch gekennzeichnet, daß die Anode mit einer Umdrehungszahl von 10 – 100 U/min rotiert und die Anodenstromdichte bei einer Arbeitstemperatur von ca. 70° C etwa 200 mA/cm² beträgt.

## Claims

1. A process for the electrochemical adjustment of the degree of oxidation of Pu(VI) in nitric acid solutions, characterised in that a starting solution of U⁶⁺/Pu⁴⁺-nitrate/HNO₃ is passed in a continuous cycle through an electrolytic cell at an electrode voltage of 3 volt.

2. A process according to Claim 1, characterised in that the uranium/plutonium nitrate solution is passed through the anode space and the cathode space (which is separated from the anode space by a diaphragm) is traversed by 2 – 3 molar HNO₃ in a cycle, wherein, at a temperature of approximately 70° C, the current density at the anode is set at 20 – 100 mA/cm² and at the cathode at 100 – 500 mA/cm².

3. A process according to Claim 2, characterised in that a diaphragm made of ceramic or an ion exchanger, an anode made of platinum sponge, or other dimensionstable material, such a PtO, and a cathode made of platinum, graphite, or glass-carbon, are used.

4. A process according to Claim 1, characterised in that an electrolytic cell without a diaphragm is used, which is fed with HNO₃ at the cathode end and is cooled at the cathode end, at an operating temperature of 85° C and current densities of 100 mA/cm² in the cathode region and 50 mA/cm² in the anode region.

5. A process according to Claim 1, characterised in that the anode rotates at a speed of 10 – 100 r.p.m. and the anode current density is about 200 mA/cm² at an operating temperature of about 70° C.

## Revendications

1. Procédé de réglage électrochimique du degré d'oxydation de Pu (VI), dans des solutions d'acide nitrique, caractérisé en ce qu'il consiste à faire passer une solution de départ de HNO₃/nitrate de U⁶⁺/Pu⁴⁺, en circuit fermé permanent dans une cellule d'électrolyse, sous une tension d'électrodes de 3 volts.

2. Procédé suivant la revendication 1, caractérisé en ce qu'il consiste à faire passer la solution de nitrate d'uranium/plutonium dans le compar-

timent anodique et à faire passer, en circuit fermé, dans le compartiment cathodique séparé du compartiment anodique par un diaphragme, du $HNO_3$ 2 à 3 fois molaire, en réglant la température à 70°C environ, la densité de courant à l'anode entre 20 et 100 mA/cm², et à la cathode entre 100 et 500 mA/cm².

3. Procédé suivant la revendication 2, caractérisé en ce qu'il consiste à utiliser un diaphragme en céramique, ou en un échangeur d'ions, une anode en mousse de platine, ou en un autre matériau ayant une bonne stabilité de dimension comme Ti/PtO, et une cathode en platine, en graphite, ou en carbone au verre.

4. Procédé suivant la revendication 1, caractérisé en ce qu'il consiste à utiliser une cellule d'électrolyse sans diaphragme, à envoyer $HNO_3$ du côté de la cathode, à refroidir le côté de la cathode, et à opérer à une température de 85°C et à des densités de courant dans la région cathodique de 100 mA/cm² ainsi que dans la région anodique de 50 mA/cm².

5. Procédé suivant la revendication 4, caractérisé en ce qu'il consiste à faire tourner l'anode à une vitesse de rotation de 10 à 100 tours/minute, et en ce que la densité de courant anodique s'élève à 200 mA/cm² environ, pour une température de fonctionnement de 70°C environ.

FIG 1

FIG 2

FIG 3